# EUROPÄISCHE PATENTSCHRIFT

(11) **EP 1 622 039 B1**
(45) Veröffentlichungstag und Bekanntmachung des Hinweises auf die Patenterteilung: **09.05.2007**
(21) Anmeldenummer: 05010833.1
(22) Anmeldetag: 19.05.2005
(51) Int. Cl.: G06F 13/42, G06F 12/06, H04L 12/403

(54) **Verfahren und Vorrichtung zur Adressvergabe an Teilnehmer eines Bussystems**
Method and apparatus for assigning addresses to users of a bus system
Méthode et dispositif pour l'attribution d'adresses aux utilisateurs d'un système de bus

(30) Priorität: 30.07.2004 DE 102004037227
(43) Veröffentlichungstag der Anmeldung: 01.02.2006
(73) Patentinhaber: SICK MAIHAK GmbH, 79183 Waldkirch (DE)
(72) Erfinder: Convent, Jürgen, 79183 Waldkirch (DE); Kury, Bernhard, 79215 Biederbach (DE); Krajka, Marcin, 88690 Uhldingen-Mühlhofen (DE); Merbreier, Bernd, 79114 Freiburg (DE)
(74) Vertreter: Ludewigt, Christoph

(56) Entgegenhaltungen:
- EP-A- 0 212 106
- DE-A1- 4 441 752

## Beschreibung

Die Erfindung betrifft ein Verfahren zur Adressierung von Teilnehmern eines Bussystems sowie ein Bussystem.

Die Erfindung wird eingesetzt in der Prozessmesstechnik, bei der mehrere I/O-Module (Input/Output-Module) an ein Analysegerät, beispielsweise einen Gasanalysator, angeschlossen werden. Es sind Bussysteme bekannt, bei denen die Slave-Teilnehmer (im Folgenden kurz nur "Slave" genannt) über eine Vielzahl von Adressleitungen mit einem Mastergerät (im Folgenden kurz "Master" genannt) verbunden sind und jeder Slave über eine separate oder mehrere Adressleitungen angesprochen wird. Aus der EP 1 072 980 A2 ist ein Bussystem bekannt, bei dem eine solche Vielzahl von Adressleitungen ersetzt wird durch eine einzige Adressleitung, die durch alle Slave verläuft. Dazu weist jeder Slave eine Logikeinheit mit einem Adresseingang und einem Adressausgang auf. Wenn ein Teilnehmer adressiert wurde, schaltet er das Adressierungssignal weiter, so dass der nächste Teilnehmer adressiert werden kann. Auf diese Weise können die Slave der Reihe nach, beginnend mit dem dem Master nächstgelegenen Slave, adressiert werden.

Weitere Verfahren und Vorrichtungen zur Adressierung von Slave-Teilnehmern sind aus der DE 44 27 691 C1 und EP 0 854 609 A2 bekannt. Aus der DE 44 41 752 A1 ist ein Verfahren und eine Vorrichtung gemäß den Oberbegriffen der unabhängigen Anspüche bekannt.

Ausgehend von diesem Stand der Technik liegt der Erfindung die Aufgabe zugrunde, ein Verfahren und ein Bussystem bereitzustellen, das einen verminderten Hardwareaufwand und Platzbedarf von Systemkomponenten ermöglicht und dementsprechend kostengünstiger ist. Die Adressierung muss zuverlässig erfolgen und ein Auswechseln einzelner Slaves möglich sein.

Zur Adressierung von Teilnehmern eines Bussystems mit einem Master und mindestens einem Slave, insbesondere zum Anschluss mehrerer I/O-Module als Slave an ein Analysegerät als Master, ist erfindungsgemäß vorgesehen, dass ein in den meisten Bussystemen sowieso vorhandener Bustakt über eine Taktleitung durch jeden Slave geschleift ist und dabei der Bustakt an einem Takteingang eines Slave zuführbar ist und der Bustakt von jedem Slave an einen Taktausgang weitergegeben werden kann, wobei im Ausgangszustand, also nach Inbetriebnahme des Bussystems, zunächst keiner der Slaves den Takt weiterschaltet und dann in mehreren Schritten eine Adressierung vorgenommen wird, wobei zunächst der dem Master benachbarte erste Slave, an dessen Takteingang das Taktsignal erstmalig ansteht, vom Master seine Adresse erhält und nach Adressierung der Master an den Slave ein Kommando zum Weiterschalten des Bustakts gibt. Daraufhin wird in dem Slave ein Bestätigungssignal in einem Mikroprozessor erzeugt, das mit dem Taktsignal logisch verknüpft wird und ein Durchschalten des Takts an den Taktausgang bewirkt. Danach steht das Taktsignal erstmalig an dem Takteingang des zweiten Slaves an und der Adressiervorgang wird für diesen Slave wiederholt. Diese Adressierung setzt sich fort bis alle Slave adressiert sind.

Ein wesentlicher Vorteil der Erfindung ist, dass keine gesonderte Adressleitung notwendig ist und dadurch Verkabelungsaufwand eingespart werden kann. Durch die Erfindung erübrigt sich zusätzliche Hardware in Form von Adressierungsschaltern oder einer oder mehrerer Adressleitungen. Hierdurch kann das Bussystem bzw. deren Slave-Teilnehmer kleiner gebaut werden. Ein Austausch von Slave-Teilnehmer in "plug and play"-Technik bleibt weiterhin möglich. Durch den seriellen Aufbau des Systems (beginnend beim Master, aufsteigend entlang der Taktleitung) ist eine einfache Teilnehmeridentifizierung möglich.

Durch Einschalten der Versorgungsspannung für das Bussystem (Aktivierung des Bussystems), werden dann die einzelnen Verfahrensschritte gemäß dem erfindungsgemäßen Verfahren durchgeführt. Alternativ ist aber auch möglich, dass an alle Teilnehmer ein Reset-Signal gesendet wird und anschließend die Adressierung gemäß dem erfindungsgemäßen Verfahren durchgeführt wird.

Vorteilhafterweise wird mit der Adressierung vom Master auf den Slave auch die Funktion des Slaves vom Slave auf den Master übertragen. Nach Adressierung aller Slave ist dann die vollständige Information über das Bussystem im Master gespeichert, insbesondere Information über Anzahl und Reihenfolge der angeschlossenen Module und deren jeweilige Funktion. Dadurch ist es möglich, den Ausfall eines Moduls oder eine Veränderung der Zusammensetzung (Reihenfolge) der Module zu erkennen und somit einen möglichen Fehler automatisch zu erkennen, was die Betriebssicherheit und die Funktionalität erhöht.

Das erfindungsgemäße Bussystem, mit dem das erfindungsgemäße Adressierungsverfahren möglich ist, zeichnet sich dadurch aus, dass die den Bustakt führende Taktleitung durch jeden Slave geschleift ist und dabei der Bustakt an einen Takteingang eines Slave zuführbar ist und der Bustakt von jedem Slave an einen Taktausgang weitergegeben werden kann, wobei eine Taktweitergabeschaltung vorgesehen ist, die in Abhängigkeit eines in einem Mikroprozessor oder einer Logikeinheit erzeugten Steuersignals, das wiederum abhängig ist von der Adressierung, den Takt an den Taktausgang durchschaltet oder nicht.

Vorteilhafterweise ist der Bus zur bidirektionalen Datenübertragung ausgelegt, so dass Informationen auf nur einer Leitung vom Master zum Slave und umgekehrt übertragen werden können.

Zur Erhöhung der Betriebssicherheit ist die Taktweitergabeschaltung derart ausgelegt, dass bei Fehlfunktion des Mikroprozessors der Takt an dem Taktausgang immer anliegt, also durchgeschaltet wird. Dadurch ist sichergestellt, dass bei Ausfall eines Slave der Takt weitergeleitet wird und die anderen Slave weiterhin erreicht, so dass die nachfolgenden Module weiterarbeiten können.

Eine Weiterleitung des Taktes im Störfall kann in Weiterbildung der Erfindung dadurch erreicht werden, dass im Slave eine Steuerleitung zur Führung des Steuersignals bei Fehlfunktion des Mikroprozessors einen hochohmigen Zustand einnimmt.

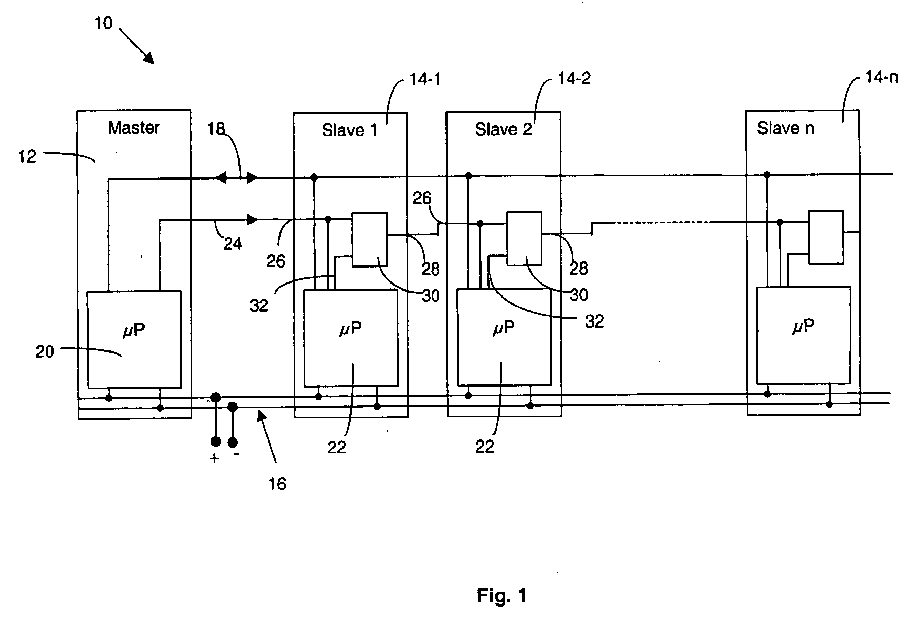

Im Folgenden wird die Erfindung anhand eines Ausführungsbeispiels unter Bezugnahme auf die Zeichnung im Einzelnen erläutert.

Die einzige Figur der Zeichnung zeigt ein Bussystem 10, bestehend aus einem Master-Teilnehmer 12 und n Slave-Teilnehmern 14-1 bis 14-n. Die Master-Teilnehmer und die Slave-Teilnehmer werden im Folgenden abgekürzt als "Master" bzw. "Slave" bezeichnet. Über eine Spannungsversorgung 16 sind sämtliche Teilnehmer mit Spannung versorgt. Des Weiteren sind sämtliche Teilnehmer an eine bidirektionale Busleitung 18 zum Zwecke der Datenübertragung parallel angebunden. Der in der Kette erste Teilnehmer ist der Master 12, bei dem es sich z.B. um ein Analysegerät mit einer speicherprogrammierbaren Steuerung, einer Recheneinheit oder dergleichen handelt. Die danach folgenden Teilnehmer sind als herkömmliches Slave ausgebildet, bei denen es sich beispielsweise um Input/Output-Module (im Folgenden I/O-Module) handeln kann, an die verschiedene Geräte wie Sensoren, Aktoren oder dergleichen anbindbar sind. Dabei verfügen der Master 12 und die Slave 14-1 bis 14-n über einen Mikroprozessor 20 bzw. 22 zur Steuerung der Datenübertragung und Verwaltung und Speicherung von Informationen.

Zur korrekten Datenübertragung wird vom Master 12 ein Bustakt ausgegeben, der auf einer Taktleitung 24 zur Verfügung steht. Die Taktleitung 24 ist durch jeden Slave 14 geschleift, wobei der Bustakt einem Takteingang 26 zuführbar ist und der Bustakt von jedem Slave an einen Taktausgang 28 weitergegeben werden kann.

Zwischen dem Takteingang 26 und dem Taktausgang 28 ist eine Taktweitergabeschaltung 30 angeordnet, die über eine Steuerleitung 32 mit dem Mikroprozessor 22 verbunden ist. In Abhängigkeit eines Steuersignals auf der Steuerleitung 32 wird der Bustakt entweder unterbrochen oder vom Takteingang 26 zum Taktausgang 28 durchgeschaltet, wie im Nachfolgenden bezüglich der Adressierung der Slave erläutert wird. Die Taktweitergabeschaltung 30 kann beispielsweise aus einem logischen "Und"-Glied bestehen, so dass der Takt dann weitergeschaltet wird, wenn am Takteingang 26 und auf der Steuerleitung 32 ein Signal anliegt.

Das erfindungsgemäße Verfahren zur Adressierung der Teilnehmer des Bussystems 10 läuft wie folgt ab: Nach Inbetriebnahme des Bussystems 10 oder nach einem Reset, der entweder über die Busleitung 18 gesendet werden kann oder auf einer nicht dargestellt separaten Reset-Leitung ausgelöst wird, nehmen sämtliche Slave einen Zustand ein, bei dem auf der Steuerleitung 32 kein Steuersignal liegt, so dass in der Taktweitergabeschaltung 30 der am Takteingang 26 anstehende Takt nicht zum Taktausgang 28 weitergeleitet wird. Vorzugsweise wird nach dem Reset die Adresse von jedem Slave auf eine definierte Adresse, z.B. 1, zurückgesetzt. Über diese definierte Adresse kann dann die eigentliche "Betriebsadresse", also die Adresse für den bestimmungsgemäßen Betrieb des Bussystems, vergeben werden. Da in diesem Zustand lediglich dem ersten Slave 14-1 ein Takt zugeführt ist, kann dieser Slave 14-1 vom Master 12 adressiert werden. Nach der Adressierung, also dem Setzen der "Betriebsadresse", wird vom Master 12 noch die Funktion des Slave 14-1 ausgelesen. Wenn dieser Datentransfer zwischen Master 12 und erstem Slave 14-1 abgeschlossen ist und die "Betriebsadresse" gesetzt ist, wird vom Master 12 ein Weiterschaltkommando an den Mikroprozessor 22 des ersten Slave 14-1 gegeben und dort ein entsprechendes Steuersignal erzeugt, so dass über die Steuerleitung 32 die Taktweitergabeschaltung 30 dazu veranlasst wird, den Bustakt zum Ausgang 28 durchzuschalten. Damit ist der Bustakt zum zweiten Slave 14-2 durchgeschaltet und liegt an dessen Takteingang 26 an. In analoger Weise wie der erste Slave 14-1 wird dann der zweite Slave 14-2 vom Master 12 adressiert und seine Funktion vom Master 12 ausgelesen. Danach werden die weiteren Slave bis 14-n entsprechend adressiert und deren Funktion ausgelesen, so dass am Ende dieses Initialisierungsprozesses sämtliche Slave 14-1 bis 14-n adressiert sind und der Master 12 die Funktionen aller Slave ausgelesen hat und eine vollständige Konfiguration des Bussystems 10 im Master abgespeichert werden kann.

Ist ein Slave 14 einmal in der Kette adressiert worden, so ist eine Adressvergabe nicht mehr möglich, sondern der Slave nimmt nur noch am Busdatenverkehr teil. Erst bei erneuter Aktivierung des Bussystems oder durch einen Reset können alle Slave 14 erneut adressiert werden.

Die Taktweitergabeschaltung 30 eines Slave 14 ist derart ausgelegt, dass wenn der Mikroprozessor 22 eine Fehlfunktion aufweist, der Bustakt immer durchgeschaltet wird, so dass auch bei Fehlfunktionen dieses Slave die anderen Slave-Teilnehmer ihren Bustakt erhalten und weiterarbeiten können. Dies kann beispielsweise dadurch erreicht werden, dass die Steuerleitung 32 zur Führung des Steuersignals bei Fehlfunktion des Mikroprozessors 22 einen hochohmigen Zustand einnimmt.

Zur Kommunikation zwischen dem Master 12 und den Slave 14 können zwei verschiedene Verfahren eingesetzt werden. Einerseits können einzelne Slaves 14 über die im Slave 14 hinterlegte Adresse einzeln vom Master angesprochen werden oder es können alle Slave 14 gleichzeitig angesprochen werden, indem beispielsweise eine Adresse 0 vom Master an alle Slave-Teilnehmer 14 gesandt wird. Eine solche Adresse 0 wird auch "Broadcast" bezeichnet. Mit dem Broadcast könnten z.B. auch alle Module gleichzeitig in einen vorher definierten Zustand zurückgesetzt werden oder es kann dadurch auch ein Reset auf allen Slave 14 ausgelöst werden.

## Patentansprüche

1. Verfahren zur Adressvergabe von Teilnehmern eines Bussystems (10) mit einem Master (12) und mindestens einem Slave (14-1, 14-n), insbesondere zum Anschluss mehrerer I/O-Module an ein Analysegerät, mit einer den Bustakt führenden Taktleitung (24), **dadurch gekennzeichnet, dass** die Taktleitung (24) durch jeden Slave (14-1, 14-n) geschleift ist und wobei der Bustakt an einem Takteingang (26) eines Slave (14-1, 14-n) zuführbar ist und der Bustakt von jedem Slave (14-1, 14-n) an einen Taktausgang (28) weitergegeben werden kann, wobei im Ausgangszustand des Bussystems (10) zunächst keiner der Slaves (14-1, 14-n) den Takt weiterschaltet und in folgenden Schritten eine Adressvergabe vorgenommen wird:
- der Slave (14-1, 14-n), der ein Taktsignal erstmalig an seinem Takteingang (26) anstehen hat, erhält vom Master (12) seine Adresse,
- nach Adressvergabe erzeugt ein Mikroprozessor (22) in dem Slave (14-1, 14-n) ein Bestätigungssignal, das mit dem Taktsignal logisch verknüpft wird, und ein Durchschalten des Takts an den Taktausgang (28) bewirkt,
- Wiederholen der beiden vorgenannten Verfahrensschritte, bis alle Slave-Teilnehmer (14-1, 14-n) ihre Adresse erhalten haben.

2. Verfahren nach Anspruch 1, **dadurch gekennzeichnet, dass** durch ein Reset-Signal alle Slaves (14-1, 14-n) derart geschaltet werden, dass der Takt nicht weitergeschaltet wird.

3. Verfahren nach Anspruch 1 oder 2, **dadurch gekennzeichnet, dass** zusammen mit der Adressvergabe die Funktion des adressierten Slave-Teilnehmers (14-1, 14-n) vom Master (12) ausgelesen wird.

4. Verfahren nach einem der vorhergehenden Ansprüche, **dadurch gekennzeichnet, dass** im Master (12) die Konfiguration des Bussystems (10) gespeichert ist.

5. Bussystem mit über wenigstens einen Bus verbundenen Master (12) und mindestens einem Slave (14-1, 14-n), insbesondere zum Anschluss mehrerer I/O-Module an ein Analysegerät, mit einer den Bustakt führenden Taktleitung (24), **dadurch gekennzeichnet, dass** die Taktleitung (24) durch jeden Slave (14-1, 14-n) geschleift ist und dabei der Bustakt an einem Takteingang (26) eines Slave (14-1, 14-n) zuführbar ist und der Bustakt von jedem Slave (14-1, 14-n) an einen Taktausgang (28) weitergegeben werden kann, wobei jeder Slave eine Taktweitergabeschaltung (30) hat zur Unterbrechung oder Durchschaltung des Takts an den Taktausgang (28) in Abhängigkeit eines in einem Mikroprozessor (22) oder einer Logikeinheit erzeugten Steuersignals, das die Durchschaltung veranlasst, nachdem der Slave seine Adresse erhalten hat.

6. Bussystem nach Anspruch 5, **dadurch gekennzeichnet, dass** der Bus (18) zur bidirektionalen Datenübertragung ausgelegt ist.

7. Bussystem nach Anspruch 5 oder 6, **dadurch gekennzeichnet, dass** die Taktweitergabeschaltung (30) derart ausgelegt ist, dass bei Fehlfunktion des Mikroprozessors (22) der Takt an dem Taktausgang anliegt.

8. Bussystem nach Anspruch 7, **dadurch gekennzeichnet, dass** im Slave eine Steuerleitung zur Führung des Steuersignals bei Fehlfunktion des Mikroprozessors einen hochohmigen Zustand einnimmt.

## Claims

1. Method for address allocation for subscribers in a bus system (10) having a master (12) and at least one slave (14-1, 14-n), in particular for connection of a plurality of I/O modules to an analysis appliance, having a clock line (24) which carries the bus clock, **characterized in that** the clock line (24) is looped through each slave (14-1, 14-n) and in which the bus clock can be supplied to a clock input (26) of one slave (14-1, 14-n), and the bus clock can be passed on from each slave (14-1, 14-n) to a clock output (28), in which none of the slaves (14-1, 14-n) initially passes on the clock when the bus system (10) is in the initial state, and an address allocation process is carried out in the subsequent steps:
- the slave (14-1, 14-n) to whose clock input (26) a clock signal has been applied for the first time receives its address from the master (12),
- after address allocation, a microprocessor (22) in the slave (14-1, 14-n) produces a confirmation signal which is logically linked with the clock signal and results in the clock being passed through to the clock output (28),
- repetition of the two abovementioned method steps until all of the slave subscribers (14-1, 14-n) have received their address.

2. Method according to Claim 1, **characterized in that** a reset signal results in all of the slaves (14-1, 14-n) being switched in such a manner that the clock is not passed on.

3. Method according to Claim 1 or 2, **characterized in that**, together with the address allocation, the function of the addressed slave subscriber (14-1, 14-n) is read from the master (12).

4. Method according to one of the preceding claims, **characterized in that** the configuration of the bus system (10) is stored in the master (12).

5. Bus system having a master (12) and at least one slave (14-1, 14-n) which are connected via at least one bus, in particular for connection of a plurality of I/O modules to an analysis appliance, having a clock line (24) which carries the bus clock, **characterized in that** the clock line (24) is looped through each slave (14-1, 14-n) and, in the process, the bus clock can be supplied to a clock input (26) of one slave (14-1, 14-n), and the bus clock can be passed on from each slave (14-1, 14-n) to a clock output (28), with each slave having a clock relaying circuit (30) for interrupting or switching through the clock to the clock output (28) as a function of a control signal which is produced in a microprocessor (22) or in a logic unit and causes the clock to switched through once the slave has received its address.

6. Bus system according to Claim 5, **characterized in that** the bus (18) is designed for bidirectional data transmission.

7. Bus system according to Claim 5 or 6, **characterized in that** the clock relaying circuit (30) is designed in such a manner that the clock is produced at the clock output in the event of a malfunction of the microprocessor (22).

8. Bus system according to Claim 7, **characterized in that** a control line for carrying the control signal in the slave assumes a high-impedance state in the event of a malfunction of the microprocessor.

## Revendications

1. Procédé d'attribution d'adresse à des utilisateurs d'un système à bus (10) qui comporte un maître (12) et au moins un esclave (14-1, 14-n), qui sert notamment à raccorder plusieurs modules E/S à un appareil d'analyse et qui comporte une ligne de fréquence de cadencement (24) acheminant la fréquence de cadencement de bus, **caractérisé en ce que** la ligne de fréquence de cadencement (24) fait une boucle à travers chaque esclave (14-1, 14-n), **en ce que** la fréquence de cadencement de bus peut être amenée à une entrée de fréquence de cadencement (26) d'un esclave (14-1, 14-n), et **en ce que** la fréquence de cadencement de bus de chaque esclave (14-1, 14-n) peut être retransmise à une sortie de fréquence de cadencement (28), moyennant quoi, lorsque le système à bus (10) est dans son état initial, tout d'abord aucun esclave (14-1, 14-n) ne relaie la fréquence de cadencement, puis une attribution d'adresse est effectuée au cours des étapes suivantes :
- l'esclave (14-1, 14-n) à l'entrée de fréquence de cadencement (26) duquel il y a un signal de fréquence de cadencement pour la première fois reçoit son adresse du maître (12) ;
- après l'attribution d'adresse, un microprocesseur (22) situé dans l'esclave (14-1, 14-n) produit un signal de confirmation qui est combiné logiquement au signal de fréquence de cadencement et qui occasionne un transfert de la fréquence de cadencement jusqu'à la sortie de fréquence de cadencement (28) ;
- répétition des deux étapes de processus mentionnées ci-dessus jusqu'à ce que tous les utilisateurs esclaves (14-1, 14-n) aient reçu leur adresse.

2. Procédé selon la revendication 1, **caractérisé en ce qu'**un signal de réinitialisation commute tous les esclaves (14-1, 14-n) de telle sorte que la fréquence de cadencement ne soit pas relayée.

3. Procédé selon la revendication 1 ou 2, **caractérisé en ce que**, conjointement avec l'attribution d'adresse, le fonctionnement de l'utilisateur esclave pourvu d'une adresse (14-1, 14-n) est lu par le maître (12).

4. Procédé selon l'une des revendications précédentes, **caractérisé en ce que** la configuration du système à bus (10) est mise en mémoire au sein du maître (12).

5. Système à bus qui comprend un maître (12) et au moins un esclave (14-1, 14-n) reliés par l'intermédiaire d'au moins un bus, qui sert notamment à raccorder plusieurs modules E/S à un appareil d'analyse et qui comprend une ligne de fréquence de cadencement (24) acheminant la fréquence de cadencement de bus, **caractérisé en ce que** la ligne de fréquence de cadencement (24) fait une boucle à travers chaque esclave (14-1, 14-n), **en ce que** la fréquence de cadencement de bus peut y être amenée à une entrée de fréquence de cadencement (26) d'un esclave (14-1, 14-n), et **en ce que** la fréquence de cadencement de bus peut y être retransmise par chaque esclave (14-1, 14-n) à une sortie de fréquence de cadencement (28), chaque esclave ayant un circuit de retransmission de fréquence de cadencement (30) servant à la coupure de la fréquence de cadencement ou à son transfert jusqu'à la sortie de fréquence de cadencement (28) en fonction d'un signal de commande produit dans un microprocesseur (22) ou dans une unité logique, lequel signal ordonne le transfert après que l'esclave a reçu son adresse.

6. Système à bus selon la revendication 5, **caractérisé en ce que** le bus (18) est conçu pour transmettre des données de manière bidirectionnelle.

7. Système à bus selon la revendication 5 ou 6, **caractérisé en ce que** le circuit de retransmission de fréquence de cadencement (30) est conçu de telle sorte que la fréquence de cadencement soit présente au niveau de la sortie de fréquence de cadencement en cas de dysfonctionnement du microprocesseur (22).

8. Système à bus selon la revendication 7, **caractérisé en ce que**, dans l'esclave, une ligne de commande servant à acheminer le signal de commande prend un état de haute impédance en cas de dysfonctionnement du microprocesseur.
